# EUROPEAN PATENT APPLICATION

(11) **EP 4 815 286 A1**
(43) Date of publication of application: **30.09.2026**
(21) Application number: 26166681.2
(22) Date of filing: 23.03.2026
(51) Int. Cl.: H02M 1/42, H02M 3/158, H02M 1/00

(54) **POWER CONVERTING APPARATUS AND HOME APPLIANCE INCLUDING THE SAME**

(30) Priority: 24.03.2025 KR 20250037504
(71) Applicant: LG Electronics Inc., Yeongdeungpo-gu Seoul 07336 (KR)
(72) Inventor: PARK, Cheonsu, 07796 Seoul (KR); HWANG, Soonhwan, 07796 Seoul (KR); JUNG, Yongchan, 07796 Seoul (KR); KIM, Kwangman, 07796 Seoul (KR); KIM, Sunghak, 07796 Seoul (KR); HWANG, Sunho, 07796 Seoul (KR)
(74) Representative: Vossius & Partner Patentanwälte Rechtsanwälte mbB

(57) **Abstract**

A power converting apparatus and a home appliance according to an embodiment of the present disclosure include: a power converting apparatus comprising: a rectifier configured to rectify input AC power; an interleaved converter including a plurality of converters, configured to convert the rectified power into DC power and output the converted DC power; a current detector configured to detect a current flowing through the interleaved converter; and a converter controller configured to control the interleaved converter, wherein the interleaved converter includes a plurality of converters, and when one or more of the plurality of converters are in an on state, if one or more of the remaining converters are turned on, the converter controller controls the newly turned-on converter based on the current measured from the converter already in the on state.

## Description

### BACKGROUND OF THE INVENTION

### 1. Field of the invention

The present disclosure relates to a power converting apparatus and a home appliance including the same, and more specifically, to a power converting apparatus capable of efficiently operating under various loads and a home appliance including the same.

### 2. Description of the Related Art

In general, electronic devices such as air conditioners are equipped with a power converting apparatus, which converts input power for operation.

An air conditioner is installed to provide a more comfortable indoor environment for humans by discharging cooled or heated air indoors to regulate the room temperature and purify the indoor air. Typically, an air conditioner includes an indoor unit, which is composed of a heat exchanger and installed indoors, and an outdoor unit, which is composed of a compressor, a heat exchanger, etc. and supplies refrigerant to the indoor unit.

A power converting apparatus is an apparatus that converts input power and supplies the converted power. Such a power converting apparatus may be disposed within a home appliance to convert the input power into power for driving the home appliance.

For example, the power converting apparatus may be disposed in an air conditioner to convert alternating current (AC) power into direct current (DC) power, thereby supplying the converted power to a load or driving a motor or the like.

Home appliances such as air conditioners are often provided with a power factor correction (PFC) unit to convert reactive power into active power, taking into account the characteristics of AC voltage.

In addition, it is possible to respond to various loads by employing an Interleaved Power Factor Correction (PFC) method.

For example, a prior art document (Korean Patent Publication No. 10-2011-0068180, published on June 22, 2011) is a disclosure relating to a grid-connected power storage system and a control method thereof, in which the number of converters in operation is adjusted according to the amount of power generated by a photovoltaic converter. However, when an additional converter is turned on while some converters are already operating, inrush current may occur due to current imbalance.

### SUMMARY OF THE INVENTION

It is an object of the present disclosure to provide a power converting apparatus capable of efficiently operating under various loads, and a home appliance including the same.

Another object of the present disclosure is to provide a power converting apparatus capable of minimizing inrush current during switching of multi-parallel converters, and a home appliance including the same.

Another object of the present disclosure is to provide a power converting apparatus capable of minimizing current imbalance of multi-parallel converters, and a home appliance including the same.

Another object of the present disclosure is to provide a power converting apparatus capable of improving temperature deviation through uniform current distribution among multi-parallel converters.

In order to achieve the above objects, a power converting apparatus and a home appliance according to an embodiment of the present disclosure includes: a rectifier configured to rectify input AC power; an interleaved converter including a plurality of converters, configured to convert the rectified power into DC power and output the converted DC power; a current detector configured to detect a current flowing through the interleaved converter; and a converter controller configured to control the interleaved converter, wherein the interleaved converter includes a plurality of converters, and when at least one or more of the plurality of converters are in an on state, if one or more of the remaining converters are turned on, the converter controller controls the newly turned-on converter based on the current measured from the converter already in the on state.

The converter controller may include current controllers configured to set a duty cycle of a switching control signal applied to the plurality of converters.

The current controller may apply the current measured from the converter already in the on state as an initial value of the current controller corresponding to the newly turned-on converter.

The current flowing through the operating converter may be the same.

The converter controller may turn on or off the switching elements provided in the plurality of converters at a zero-crossing point of the input AC power source.

The converter controller may include a first current controller configured to set a duty cycle of a switching control signal applied to a first converter among the plurality of converters, and a second current controller configured to set a duty cycle of a switching control signal applied to a second converter among the plurality of converters.

When the first converter is in the on state, if the second converter is turned on, the converter controller may apply the current measured from the first converter as an initial value of the second current controller.

The converter controller may include a first current controller configured to set a duty cycle of a switching control signal applied to a first converter among the plurality of converters, a second current controller configured to set a duty cycle of a switching control signal applied to a second converter among the plurality of converters, and a third current controller configured to set a duty cycle of a switching control signal applied to a third converter among the plurality of converters.

When the first converter is in the on state, if at least one of the second converter and the third converter is turned on, the converter controller may apply the current measured from the first converter as an initial value of the current controller corresponding to the newly turned-on converter.

When the first converter and the second converter are in the on state, if the third converter is turned on, the converter controller may apply the current measured from the first converter as an initial value of the third current controller.

The first converter may include: a first inductor connected to the rectifier; a first diode connected to an output terminal of the interleaved converter; and a first switching element connected between the first inductor and the first diode.

The second converter may include: a second inductor connected to the rectifier, a second diode connected to the output terminal of the interleaved converter, and a second switching element connected between the second inductor and the second diode.

The third converter may include: a third inductor connected to the rectifier, a third diode connected to the output terminal of the interleaved converter, and a third switching element connected between the third inductor and the third diode.

The power converting apparatus and the home appliance may further include a capacitor connected to the output terminal of the interleaved converter.

The converter controller may be configured to control the number of converters in operation among the plurality of converters, based on a load level corresponding to two terminals of the capacitor.

In order to achieve the above objects, a power converting apparatus and a home appliance according to an embodiment of the present disclosure includes: a rectifier configured to rectify input AC power; an interleaved converter including a plurality of converters, configured to convert the rectified power into DC power and output the converted DC power; a current detector configured to detect a current flowing through the interleaved converter; and a converter controller configured to control the interleaved converter, wherein a first converter of the interleaved converters includes a first inductor and a first switching element, a second converter of the interleaved converters includes a second inductor and a second switching element, and a third converter of the interleaved converters includes a third inductor and a third switching element, and when the first converter is in an on state, if at least one of the second converter and the third converter is turned on, the converter controller may control the newly turned-on converter based on the current measured from the first converter.

The converter controller may include a first current controller configured to set a duty cycle of a switching control signal applied to the first converter, a second current controller configured to set a duty cycle of a switching control signal applied to the second converter, and a third current controller configured to set a duty cycle of a switching control signal applied to the third converter, and when the first converter is in the on state, if at least one of the second converter and the third converter is turned on, the converter controller may apply the current measured from the first converter as an initial value of the current controller corresponding to the newly turned-on converter.

The converter controller may turn on or off the first to third switching elements at a zero-crossing point of the input AC power source.

The power converting apparatus and the home appliance may further include a capacitor connected to the output terminal of the interleaved converter, wherein the converter controller is configured to control the number of converters in operation among the plurality of converters, based on a load level corresponding to two terminals of the capacitor.

According to at least one embodiment of the present disclosure, it is possible to provide a power converting apparatus capable of efficiently operating under various loads, and a home appliance including the same.

Furthermore, according to at least one embodiment of the present disclosure, it is possible to minimize current imbalance of multi-parallel converters.

Furthermore, according to at least one embodiment of the present disclosure, it is possible to minimize current imbalance of multi-parallel converters.

Furthermore, according to at least one embodiment of the present disclosure, it is possible to improve temperature deviation through uniform current distribution among multi-parallel converters.

Meanwhile, various other effects will be directly or implicitly disclosed in the detailed description of embodiments of the present disclosure set forth below.

### BRIEF DESCRIPTION OF THE DRAWINGS

FIG. 1 is a diagram illustrating the configuration of an air conditioner according to one embodiment of the present disclosure.
FIG. 2 is a schematic diagram of the outdoor unit and indoor unit of FIG. 1.
FIG. 3 is a simplified internal block diagram of the air conditioner of FIG. 1.
FIG. 4 is a circuit diagram of a power converting apparatus according to one embodiment of the present disclosure.
FIG. 5 is a circuit diagram of a power converting apparatus according to one embodiment of the present disclosure.
FIG. 6 is a diagram referenced for the description of multi-parallel converter control according to one embodiment of the present disclosure.
FIG. 7 is a diagram referenced for the description of a current controller according to one embodiment of the present disclosure.
FIG. 8 is a configuration diagram of three-parallel converters according to one embodiment of the present disclosure.
FIGS. 9 to 14 are diagrams referenced for the description of current balancing control according to one embodiment of the present disclosure.

### DETAILED DESCRIPTION OF THE PREFERRED EMBODIMENTS

Hereinafter, the present disclosure will be described in detail with reference to the attached drawings. However, the present disclosure is not limited to these embodiments and may, of course, be modified in various forms.

In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present specification, terms such as first, second, and the like may be used to describe various elements; however, these elements are not limited by such terms. The terms are used solely for distinguishing one element from another.

Meanwhile, the power converting apparatus described in the present specification may be a power converting apparatus provided within a home appliance. The home appliance may include, for example, a refrigerator, a washing machine, a dryer, an air conditioner, a dehumidifier, a cooking appliance, a vacuum cleaner, etc. Hereinafter, the description will focus on an air conditioner among various home appliances.

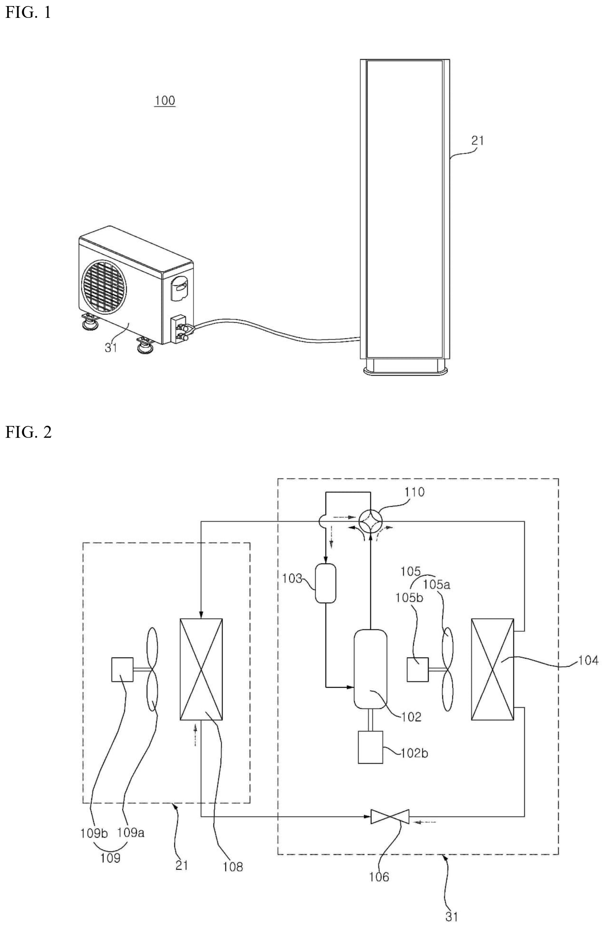

FIG. 1 is a diagram illustrating the configuration of an air conditioner according to one embodiment of the present disclosure.

Referring to FIG. 1, the air conditioner 100 according to the present disclosure may include an indoor unit 21 and an outdoor unit 31 connected to the indoor unit 21.

The indoor unit 21 of the air conditioner may be applied to any of a stand-type air conditioner, a wall-mounted air conditioner, or a ceiling-mounted air conditioner. In the drawing, however, a stand-type indoor unit 21 is illustrated as an example.

Meanwhile, the air conditioner 100 may further include at least one of a ventilation device, an air purification device, a humidification device, and a heater, and may operate in association with the operation of the indoor unit and the outdoor unit.

The outdoor unit 31 may include a compressor (not shown) that compresses supplied refrigerant, an outdoor heat exchanger (not shown) that transfers heat between refrigerant and outdoor air, an accumulator (not shown) that extracts gaseous refrigerant from the supplied refrigerant and supplies it to the compressor, and a four-way valve (not shown) that selects a refrigerant flow path for heating operation. In addition, the outdoor unit 31 may further include multiple sensors, valves, and an oil recovery device, but the description of their configuration will be omitted below.

The outdoor unit 31 may operate the provided compressor and outdoor heat exchanger to compress the refrigerant or perform heat exchange according to settings, thereby supplying the refrigerant to the indoor unit 21. The outdoor unit 31 may be driven by a remote controller (not shown) or by a demand from the indoor unit 21. In this case, as the cooling/heating capacity varies in response to the indoor unit being run, the number of outdoor units in operation and the number of compressors in operation installed in the outdoor unit may also vary. In addition, although FIG. 1 illustrates one indoor unit 21 and one outdoor unit 31, the present disclosure is not limited thereto. For example, a plurality of indoor units 21 may be connected to a single outdoor unit 31 through refrigerant pipes.

In this case, the outdoor unit 31 may supply the compressed refrigerant to the connected indoor unit 21.

The indoor unit 21 may receive the refrigerant from the outdoor unit 31 and discharge cooled or heated air to the indoor space. The indoor unit 21 includes an indoor heat exchanger (not shown), an indoor fan (not shown), an expansion valve (not shown) in which the supplied refrigerant expands, and multiple sensors (not shown).

In this case, the outdoor unit 31 and the indoor unit 21 may be connected with wires or wirelessly to transmit and receive data to and from each other, and the outdoor unit and the indoor unit may be connected to a remote controller (not shown) with wires or wirelessly to operate under the control of the remote controller (not shown).

A remote control (not shown) may be connected to the indoor unit 21 to input a user's control command to the indoor unit 31 and to receive and display status information of the indoor unit. In this case, the remote control may communicate with the indoor unit either through wired or wireless communication depending on the type of connection to the indoor unit 31.

FIG. 2 is a schematic diagram of the outdoor unit and indoor unit of FIG. 1.

Referring to FIG. 2, the air conditioner 100 is largely divided into an indoor unit 21 and an outdoor unit 31.

The outdoor unit 31 may include a compressor 102 that compresses refrigerant, a compressor motor 102b that drives the compressor, an outdoor heat exchanger 104 that dissipates heat from the compressed refrigerant, an outdoor blower 105 including an outdoor fan 105a disposed on one side of the outdoor heat exchanger 104 to promote heat dissipation of the refrigerant and a motor 250 that rotates the outdoor fan 105a, an expansion mechanism or expansion valve 106 that expands the condensed refrigerant, a cooling/heating switching valve or four-way valve 110 that changes the flow path of the compressed refrigerant, and an accumulator 103 that temporarily stores vaporized refrigerant, removes moisture and foreign substances, and supplies refrigerant at a constant pressure to the compressor.

The indoor unit 21 includes an indoor heat exchanger 108 disposed indoors to perform cooling and heating functions and an indoor blower 109 including an indoor fan 109a disposed on one side of the indoor heat exchanger 108 to promote heat dissipation of the refrigerant, and a motor 109b for rotating the indoor fan 109a.

At least one indoor heat exchanger 108 may be installed. The compressor 102 may be at least one of an inverter compressor and a constant-speed compressor.

Moreover, the air conditioner 100 may be configured as a cooling unit for cooling an indoor space, or as a heat pump capable of cooling or heating the indoor space.

Meanwhile, the outdoor fan 105a in the outdoor unit 31 may be driven by an outdoor fan driving unit 200 that drives the motor 250.

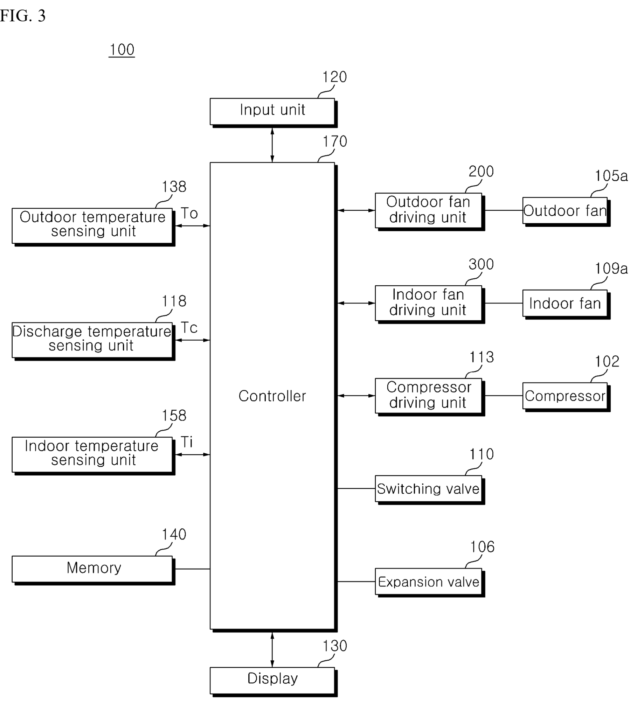

Meanwhile, the compressor 102 in the outdoor unit 31 may be driven by a compressor motor driving unit (113 of FIG. 3) that drives a compressor motor (not shown).

Meanwhile, the indoor fan 109a in the indoor unit 21 may be driven by an indoor fan driving unit 300 that drives the indoor fan motor 109b.

Hereinafter, the outdoor fan driving unit 200 may also be referred to as an outdoor fan driving device. In addition, the indoor fan driving unit 300 may also be referred to as an indoor fan driving device.

FIG. 3 is a simplified internal block diagram of the air conditioner of FIG. 1.

Referring to FIG. 3, the air conditioner 100 may include a compressor 102, an outdoor fan 105a, an indoor fan 109a, a controller 170, a discharge temperature sensing unit 118, an outdoor temperature sensing unit 138, an indoor temperature sensing unit 158, and a memory 140. In addition, the air conditioner 100 may further include a compressor driving unit 113, an outdoor fan driving unit 200, an indoor fan driving unit 300, a switching valve 110, an expansion valve 106, a display 130, and an input unit 120.

The compressor 102, the outdoor fan 105a, and the indoor fan 109a may operate as described above with reference to FIG. 2.

The input unit 120 may be provided with a plurality of operation buttons to transmit to the controller 170 an input signal for a target operating temperature of the air conditioner.

The display 130 may display the operating state of the air conditioner 100. For example, the display 130 may include a display means for outputting the operating state of the indoor unit 21, and may display operating status and errors.

The display 130 may also display the connection state between the indoor unit 21 and the outdoor unit 31. For example, the display 130 may be provided with a light emitting diode (LED), which may be turned on when the connection state of a communication line and/or power line is normal, and may be turned off when the connection state of the communication line and/or power line is abnormal.

The memory 140 may store data necessary for the operation of the air conditioner 100.

The discharge temperature sensing unit 118 may detect a refrigerant discharge temperature (Tc) from the compressor 102, and transmit a signal for the detected refrigerant discharge temperature (Tc) to the controller 170.

The outdoor temperature sensing unit 138 may detect an outdoor temperature (To), which is the temperature around the outdoor unit 31 of the air conditioner 100, and may transmit a signal for the detected outdoor temperature (To) to the controller 170.

The indoor temperature sensing unit 158 may detect an indoor temperature (Ti), which is the temperature around the indoor unit 21 of the air conditioner 100, and may transmit a signal for the detected indoor temperature (Ti) to the controller 170.

The controller 170 may control the operation of the air conditioner 100 based on at least one of the detected refrigerant discharge temperature (Tc), the detected outdoor temperature (To), the detected indoor temperature (Ti), and the input target temperature. For example, the controller 170 may calculate a final target superheat degree and control the air conditioner 100 to operate accordingly.

Meanwhile, as illustrated in the drawing, the controller 170 may control the compressor driving unit 113, the outdoor fan driving unit 200, and the indoor fan driving unit 300, in order to control the operation of the compressor 102, the indoor fan 109a, and the outdoor fan 105a, respectively.

For example, the controller 170 may output respective speed command signals to the compressor driving unit 113, the outdoor fan driving unit 200, and the indoor fan driving unit 300 based on the target temperature.

Based on the respective speed command signals, the compressor motor (not shown), the motor 250, and the indoor fan motor 109b may operate at their respective target rotational speeds.

Meanwhile, in addition to controlling the compressor driving unit 113, the outdoor fan driving unit 200, or the indoor fan driving unit 300, the controller 170 may control the overall operation of the air conditioner 100.

For example, the controller 170 may control the operation of the cooling/heating switching valve or four-way valve 110. Alternatively, the controller 170 may control the operation of the expansion mechanism or expansion valve 106.

Meanwhile, the air conditioner may further include a power supply unit (not shown) that supplies power to each unit such as the compressor 102, the outdoor fan 105a, the indoor fan 109a, the controller 170, and the memory 140.

The power supply unit may convert input power into power required for driving each unit and supply it. Therefore, at least a part of the configuration of the power supply unit may be referred to as a power converting apparatus.

In addition, the power converting apparatus may be implemented as a motor driving device that converts power to drive various motors.

The power converting apparatus described below may be provided in the driving units 200, 300, and 113, power supply unit, etc. of the home appliance.

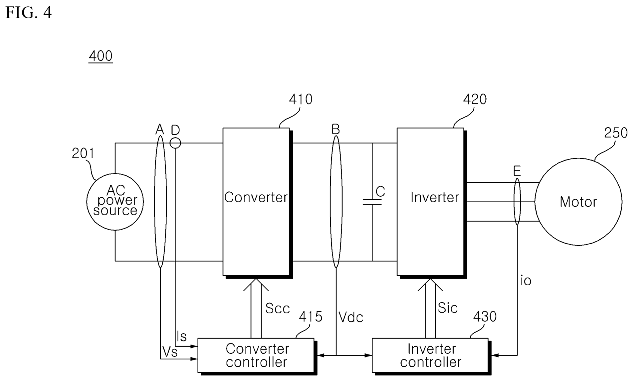

FIG. 4 is a circuit diagram of a power converting apparatus according to one embodiment of the present disclosure.

Referring to FIG. 4, the power converting apparatus 400 according to one embodiment of the present disclosure may include a converter 410 that converts input power into direct current power and outputs it to a DC link, a converter controller 415, and a DC-link capacitor (C) connected to the DC link.

In addition, the power converting apparatus 400 may include an inverter 420 having a plurality of switching elements for converting the DC power from the capacitor (C) into alternating current, and an inverter controller 430 for controlling the inverter 420.

The power converting apparatus 400 may further include at least one of an input voltage detector (A), a DC-link voltage detector (B), an input current detector (D), and an output current detector (E).

Meanwhile, in the description below with reference to FIG. 4, an example is illustrated in which the power converting apparatus 400 is used as a motor driving device that converts power input from a commercial AC power source 201 and supplies it to the motor 250. In this case, the power converting apparatus 400 may be referred to as a motor driving device, a motor driving unit, etc. Alternatively, the power converting apparatus 400 may convert the input power and supply it to a load. Although FIG. 4 mainly describes an embodiment in which the power converting apparatus 400 is implemented as a motor driving device, the present disclosure is not limited to this.

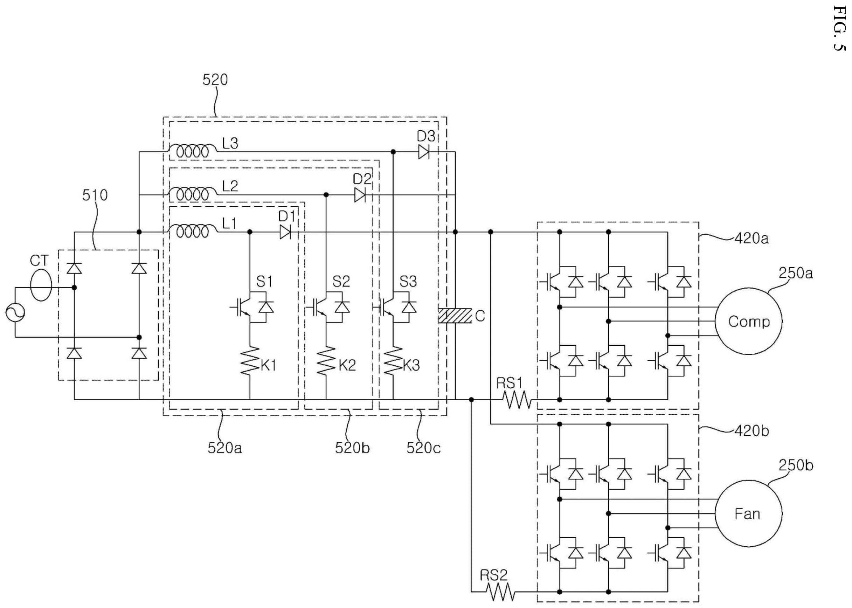

The converter 410 may convert the commercial AC power 201 into DC power and output it. To this end, the converter 410 may be provided with a rectifier (510 of FIG. 5). In addition, it is also possible to further provide a reactor (not shown).

A smoothing capacitor (C) is connected to an output terminal of the converter 410. The capacitor (C) may store the power output from the converter 410. Since the power output from the converter 410 is DC power, it may be referred to as a DC-link capacitor.

The inverter 420 may output the converted AC power to the motor 250.

Referring to FIG. 4, the input voltage detector (A) may detect an input voltage (Vs) from the commercial AC power source 201.

The input voltage detector (A) may include a resistor element, an OP AMP, and the like for voltage detection. The detected input voltage (Vs) may be applied to the converter controller 415 and the inverter controller 430 as a discrete signal in the form of a pulse.

Meanwhile, the input voltage detector (A) may also detect the peak voltage and zero-crossing point of the input voltage.

The input current detector (D) may detect an input current (is) supplied from the commercial AC power source 201. For this purpose, a current transformer (CT), a shunt resistor, etc. may be used as the input current detector (D). The detected input current (is) may be inputted to the converter controller 415 and the inverter controller 430 for power consumption calculation as a discrete signal in the form of a pulse.

Next, a capacitor (C) may be provided at the output terminal of the converter 410 to store or smooth the power converted by the converter 410. Two terminals of the capacitor (C) may be referred to as a DC link. Therefore, the capacitor (C) may also be referred to as a DC-link capacitor.

Meanwhile, the converter controller 415 may generate a converter switching control signal (Scc) based on the input voltage (Vs), the input current (Is), and a DC-link voltage (Vdc) and output the signal to the converter 410.

The DC-link voltage detector (B) may detect the DC-link voltage (Vdc), which is the voltage across the two terminals of the smoothing capacitor (C). To this end, the DC-link voltage detector (B) may include a resistor element, an amplifier, etc. The detected DC-link voltage (Vdc) may be inputted to the converter controller 415 and the inverter controller 430 as a discrete signal in the form of a pulse.

The inverter 420 may drive the motor 250. To this end, the inverter 420 may include a plurality of inverter switching elements, and by the on/off operation of the switching elements, the smoothed DC power (Vdc) may be converted into three-phase AC power of a predetermined frequency and outputted to the three-phase synchronous motor 250.

The inverter 420 may include three pairs of upper-arm switching elements and lower-arm switching elements, each pair being connected in series, and the three pairs being connected in parallel with each other. A diode may be connected in reverse parallel to each switching element.

The switching elements in the inverter 420 may be turned on/off based on inverter switching control signals (Sic) from the inverter controller 430. As a result, three-phase AC power having a predetermined frequency may be outputted to the three-phase synchronous motor 250.

The inverter controller 430 may control the switching operation of the inverter 420. To this end, the inverter controller 430 may receive the output current (iₒ) detected by the output current detector (E).

The inverter controller 430 may output an inverter switching control signal (Sic) to the inverter 420 in order to control the switching operation of the inverter 420. The inverter switching control signal (Sic) may be generated and outputted as a pulse width modulation (PWM) switching control signal, based on the output current value (iₒ) detected by the output current detector (E),

The output current detector (E) may detect the output current (iₒ) flowing between the inverter 420 and the motor 250. That is, it may detect the current flowing into the motor 250. The output current detector (E) may detect currents in all phases (ia, ib, ic), or alternatively, may detect output currents in two phases by using three-phase balance.

The output current detector (E) may be positioned between the inverter 420 and the motor 250, and a current transformer (CT), a shunt resistor, etc. may be used for current detection.

When the shunt resistor is used, three shunt resistors may be positioned between the inverter 420 and the synchronous motor 250, or one end of each shunt resistor may be connected to the three lower-arm switching elements of the inverter 420. Alternatively, two shunt resistors may be used by utilizing three-phase balance. Furthermore, when a single shunt resistor is used, the shunt resistor may be disposed between the above-described capacitor (C) and the inverter 420.

The detected output current (iₒ) may be applied to the inverter controller 430 as a discrete signal in the form of a pulse, and based on the detected output current (iₒ), an inverter switching control signal (Sic) may be generated.

Meanwhile, the motor 250 may be a three-phase motor. The motor 250 may include a stator and a rotor, and when three-phase AC power of a predetermined frequency is applied to the stator coils of each phase (a, b, and c phases), the rotor may rotate.

Such a motor 250 may include, for example, a surface-mounted permanent magnet synchronous motor (SMPMSM), an interior permanent magnet synchronous motor (IPMSM), and a synchronous reluctance motor (SynRM). Among these, the SMPMSM and the IPMSM are permanent magnet synchronous motors (PMSM) employing permanent magnets, whereas the SynRM is characterized by the absence of permanent magnets.

Meanwhile, the converter 410 and the inverter 420 may each include a switching element. For example, the converter 410 and the inverter 420 may include an IGBT switching element.

FIG. 5 is a circuit diagram of a power converting apparatus according to one embodiment of the present disclosure.

Referring to FIGS. 4 and 5, the power converting apparatus 400 according to one embodiment of the present disclosure may include a converter 410 that converts input AC power into DC power and outputs it, a smoothing capacitor (C) that smooths and stores the output power of the converter 410, and an inverter 420 having a plurality of switching elements, that converts the DC power from the smoothing capacitor (C) into AC power to drive a motor.

Meanwhile, the converter 410 may include a rectifier 510 that rectifies input AC power and outputs it, and an interleaved converter 520 including a plurality of converters 520a, 520b, ... disposed between the rectifier 510 and the smoothing capacitor (C), that converts the rectified power into DC power and outputs the converted DC power.

As the interleaved converter, an interleaved boost converter, an interleaved buck-boost converter, an interleaved buck converter, or the like may be employed; however, the following description will focus on the interleaved boost converter.

A plurality of boost converters 520a, 520b, ... within the interleaved boost converter 520 are connected in parallel to perform interleaving operation. By connecting the plurality of boost converters in parallel and performing voltage control through interleaving, voltage control based on current distribution becomes possible. Accordingly, the durability of circuit components within the interleaved boost converter 520 can be improved. In addition, the ripple of the input current can be reduced.

FIG. 5 illustrates three-parallel converters which are three converters 520a, 520b, and 520c connected in parallel; however, it is also possible to connect more than three converters in parallel.

The first converter 520a may include a first diode (D1) having one end connected to the capacitor (C), a first inductor (L1) connected to the rectifier 510, and a first switching element (S1) connected in parallel with the first inductor (L1) and the first diode (D1). One end of the capacitor (C) may serve as an output terminal of the interleaved converter 520. The first inductor (L1) may be connected between the first diode (D1) and the rectifier 510.

Meanwhile, the second converter 520b may include a second diode (D2) having one end connected to the capacitor (C), a second inductor (L2) connected to the rectifier 510, and a second switching element (S2) connected in parallel with the second inductor (L2) and the second diode (D2). The second inductor (L2) may be connected between the second diode (D2) and the rectifier 510.

Meanwhile, the third converter 520c may include a third diode (D3) having one end connected to the capacitor (C), a third inductor (L3) connected to the rectifier 510, and a third switching element (S3) connected in parallel with the third inductor (L3) and the third diode (D3). The third inductor (L3) may be connected between the third diode (D3) and the rectifier 510.

Meanwhile, the power converting apparatus 400 may supply power to a plurality of loads 250a and 250b. The power converting apparatus 400 may supply power to a first load 250a (e.g., a compressor) through a first inverter 420a, and may supply power to a second load 250b (e.g., a fan) through a second inverter 420b.

Shunt resistors (Rs1 and Rs2) may be disposed corresponding to the respective inverter 420a and 420b.

Meanwhile, when the power converting apparatus 400 is used in applications with large load fluctuations, such as the compressor of an air conditioner, if only one boost converter is selected for operation, it may be difficult to perform an operation that satisfies both low-load and high-load regions.

In the present disclosure, different numbers of converters are selectively operated depending on the load.

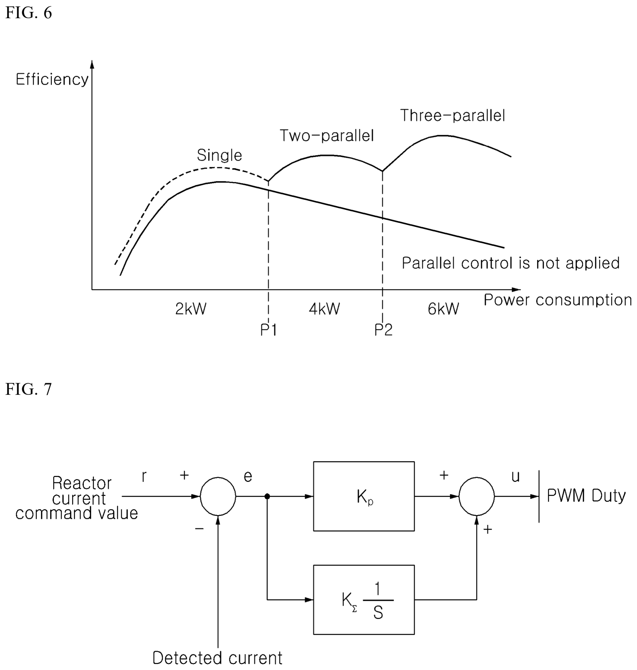

FIG. 6 is a diagram referenced for the description of multi-parallel converter control according to one embodiment of the present disclosure.

As shown in FIG. 6, the converter controller 415 may determine the number of converters operating at an optimal efficiency point according to the load. The converter controller 415 varies the number of switching elements (S1, S2, and S3) in operation depending on the load. The criterion for determining the number of converters in operation may be based on the efficiency of the converters.

The converter controller 415 may calculate the amount of load across the two terminals of the capacitor based on the DC-link voltage (Vdc) detected by the DC-link voltage detector (B). In this case, the amount of load may represent power.

Alternatively, the converter controller 415 may calculate the amount of load across the two terminals of the capacitor based on the input current (Is) detected by the input current detector (A). In this case, the amount of load may represent power.

The converter controller 415 may control the number of converters in operation based on a load level corresponding to the two terminals of the capacitor (C). Depending on the load level corresponding to the two terminals of the capacitor (C), the converter controller 415 may operate the interleaved converter 520 in a single converter interval where only one converter operates, a two-parallel converter interval where two converters operate, and a three-parallel converter interval where three converters operate.

For example, in the single converter interval, the converter controller 415 may operate only the first converter 520a. In the two-parallel converter interval, the converter controller 415 may operate the first converter 520a and the second converter 520b. In the three-parallel converter interval, the converter controller 415 may operate the first converter 520a, the second converter 520b, and the third converter 520c.

By applying parallel control, it is possible to respond to various loads compared to when parallel control is not applied, thereby enabling high-efficiency operation. In particular, parallel control may be more effective under high-load conditions with large power consumption.

Meanwhile, the power converting apparatus 400 may include current detectors (K1, K2, and K3) for detecting the current flowing through the interleaved converter 520.

The first current detector (K1) may be connected to the first switching element (S1) to measure the current of the first converter 520a. The first current detector (K1) may measure the output current of the first converter 520a. The first current detector (K1) may measure the current flowing through the first inductor (L1).

The second current detector (K2) may be connected to the second switching element (S2) to measure the current of the second converter 520b. The second current detector (K2) may measure the output current of the second converter 520b. The second current detector (K2) may measure the current flowing through the second inductor (L2).

The third current detector (K3) may be connected to the third switching element (S3) to measure the current of the third converter 520c. The third current detector (K3) may measure the output current of the third converter 520c. The third current detector (K3) may measure the current flowing through the third inductor (L3).

FIG. 7 is a diagram referenced for the description of a current controller according to one embodiment of the present disclosure.

When the load includes a motor 250 and an inverter 420, the converter controller 415 may generate a DC link voltage command value based on the output voltage supplied to the motor 250 and the magnitude of the input AC voltage (Vs).

The converter controller 415 may generate a current command value based on the DC link voltage command value and the DC link voltage (Vdc), generate a turn-on duty cycle based on the current command value, and generate and output a converter switching control signal (Scc) based on the turn-on duty cycle. Based on the converter switching control signal (Scc), the switching elements (S1, S2, and S3) within the interleaved converter 520 operate.

The converter controller 415 may include respective current controllers 700 for the converters 520a, 520b, and 520c.

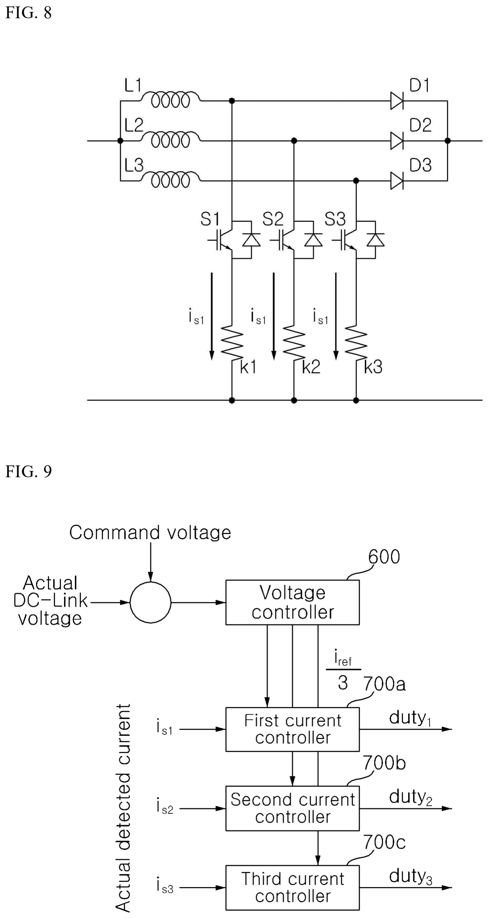

Each current controller 700 may output a converter switching control signal (Scc) having a predetermined duty cycle based on the output (current command) of the voltage controller (see 600 in FIG. 9) and the measured input current (Is).

Referring to FIG. 7, the current controller 700 may be a PI controller. The current controller 700 may include an integrator.

At an initial stage of the on time of the converters 520a, 520b, and 520c, a certain amount of time is required for the integrator to operate in a stable state. During this time, current imbalance among the converters 520a, 520b, and 520c may occur.

According to the present disclosure, when one or more of the converters 520a, 520b, and 520c are in the on state, if one or more of the remaining converters are turned on, the converter controller 415 may control the newly turned-on converter based on the current measured from the converter already in the on state.

That is, by applying the integrator value of an operating converter to the initial value of the integrator of a newly activated converter, the newly activated converter can immediately reach a stable state.

In addition, current is evenly distributed so that the current flowing through the operating converter is the same. The converter controller 415 operates one to N switching elements of the multi-parallel converters so that they function at the optimal efficiency point according to the load. In this case, stable and uniform current is immediately distributed to the switching elements that are enabled.

According to the present disclosure, when an additional converter is activated while some converters are already operating, inrush current is minimized.

The converter controller 415 may include a current controller 700 that sets the duty cycle of a switching control signal applied to the plurality of converters 520a, 520b, and 520c. A plurality of current controllers 700 may be provided corresponding to the plurality of converters 520a, 520b, and 520c.

The current controller 700 may output a duty cycle command value based on the current command and a measured current.

The converter controller 415 may apply the current measured from the converter already in the on state as the initial value of the current controller corresponding to the newly turned-on converter.

Meanwhile, the converter controller 415 may turn on or off the switching elements S1, S2, and S3 provided in the plurality of converters 520a, 520b, and 520c at the zero-crossing point of the input AC power source 201.

The converter controller 415 may perform switching control of the switching elements S1, S2, and S3 within an interval that includes the zero-crossing point, i.e., the point at which the voltage of the input AC power source 201 is zero. In other words, the converter controller 415 may control the switching elements S1, S2, and S3 to switch within a predetermined interval (zero-voltage interval) with respect to the zero-crossing point, i.e., the point at which the input voltage (Vs) is zero.

Meanwhile, the instant when the newly turned-on converter is activated may be based on the zero-crossing point of the AC power source in order to minimize impact. Similarly, the switching elements (S1, S2, and S3) may also be turned off at the zero-crossing point of the AC power source.

FIG. 8 is a configuration diagram of three-parallel converters according to one embodiment of the present disclosure.

A current transformer (CT), a shunt resistor, etc. may be used as the first to third current detectors (K1, K2, and K3). The detected inductor currents (is1, is2, and is3) may be inputted to the converter controller 415 as a discrete signal in the form of a pulse.

Preferably, the same current should flow through the three switching elements (S1, S2, and S3). That is, the heat generation of the reactors (L1, L2, and L3) and the power devices should be uniform.

FIGS. 9 to 14 are diagrams referenced for the description of current balancing control according to one embodiment of the present disclosure.

Referring to FIG. 9, the voltage controller 600 may output a current command based on the DC link voltage measured by the output voltage detector (B) and a voltage command value.

The voltage controller 600 may generate a current command value based on the DC link voltage (Vdc) detected by the output voltage detector (B), i.e., the DC link voltage detector (B), and the DC link voltage command value.

Referring to FIGS. 7 to 9, the current controller 520 may output duty cycle command values (duty1, duty2, and duty3) through a PI controller or the like, based on the current command value and the detected inductor (reactor) current. The switching control signal (Scc) for controlling the switching elements (S1, S2, and S3) may be generated based on the duty cycle command values.

The converter controller 415 may include a switching control signal output unit (not shown) that generates the switching control signal (Scc) based on the output signals (duty1, duty2, and duty3) of the current controller 520.

Meanwhile, in order for the currents of the three switching elements (S1, S2, and S3) to be equally distributed with one-third for each, current feedback should be received, and corresponding duty cycle values (duty1, duty2, and duty3) should be set accordingly.

The converter controller 415 may include a first current controller 700a which sets the duty cycle (duty1) of the switching control signal applied to the first converter 520a, and a second current controller 700b which sets the duty cycle (duty2) of the switching control signal applied to the second converter 520b, among the plurality of converters 520a, 520b, and 520c.

When the first converter 520a is in the on state, if the second converter 520b is turned on, the converter controller 415 may apply the current (is1) measured from the first converter 520a, rather than the current (is2) measured from the second converter 520b, as the initial value of the second current controller 700b.

The converter controller 415 may further include a third current controller 700c which sets the duty cycle (duty3) of the switching control signal applied to the third converter 520c, among the plurality of converters 520a, 520b, and 520c.

The converter controller 415 may control the number of converters in operation, among the first to third converters, based on the load level corresponding to the two terminals of the capacitor (C).

For controlling the converters 520a, 520b, and 520c, the current (is1, is2, and is3) measured from the respective converters 520a, 520b, and 520c may be used. However, when an additional converter is activated while a certain converter is already operating, the current value measured from the already operating converter may be used instead at an initial stage of the on time of the switching element of the additional converter, thereby allowing the current to be distributed equally and rapidly.

When the first converter 520a is in the on state, if at least one of the second converter 520b and the third converter 520c is turned on, the converter controller 415 may control the newly turned-on converter based on the current (is1) measured from the first converter 520a.

When the first converter 520a is in the on state, if at least one of the second converter 520b and the third converter 520c is turned on, the converter controller 415 may apply the current (is1) measured from the first converter 520a as the initial value of the current controller corresponding to the newly turned-on converter.

For example, when the first converter 520a is in the on state, if at least one of the second converter 520b and the third converter 520c is turned on, the converter controller 415 may apply the current (is1) measured from the first converter 520a as the initial value of the third current controller 700c.

When the first converter 520a is in the on state, if the second converter 520b and the third converter 520c are turned on, the converter controller 415 may apply the current (is1) measured from the first converter 520a as the initial value of the second current controller 700b and the third current controller 700c.

Furthermore, when the first converter 520a and the second converter 520b are in the on state, if the third converter 520c is turned on, the converter controller 415 may apply either the current (is1) measured from the first converter 520a or the current (is2) measured from the second converter 520b as the initial value of the third current controller 700c.

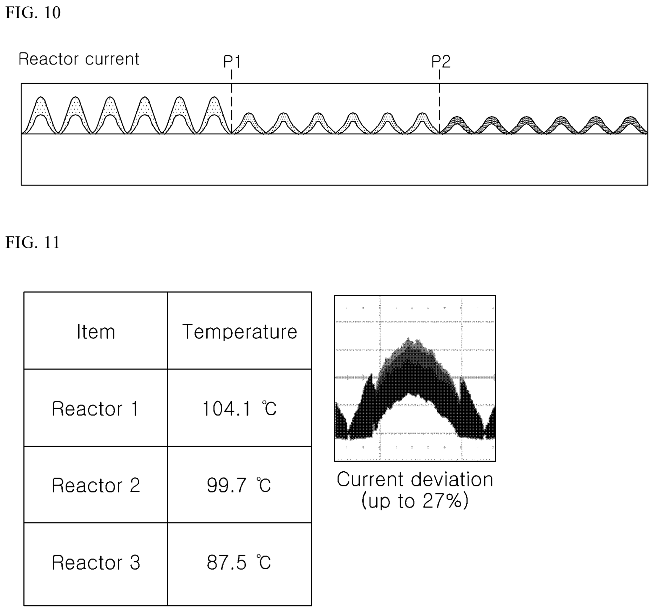

FIG. 10 illustrates the reactor current measured in the interleaved converter 520 when multi-parallel converters are controlled as in FIG. 6.

Referring to FIGS. 6 and 10, the first converter 520a, the second converter 520b, and the third converter 520c are turned on/off at optimal efficiency points (P1 and P2).

In this case, current should also be stably distributed to the converters that are activated later.

Referring to FIGS. 6 and 10, in a single converter interval, only one converter operates independently, and current is measured only from that converter. At the first point (P1), when another converter is additionally turned on, the current is distributed equally between the two converters, with one-half for each. Furthermore, at the second point (P2), when another converter is additionally turned on, the current is distributed equally among the three converters, with one-third for each.

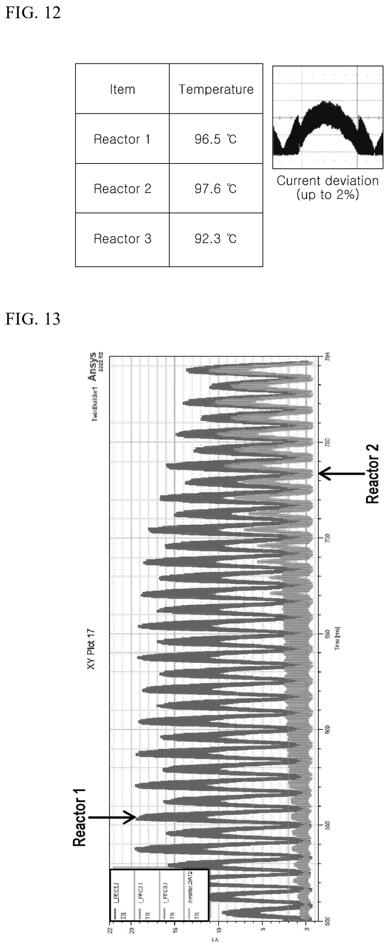

FIGS. 11 and 12 illustrate the results of improvement of temperature deviation between phases achieved by uniform current distribution.

FIG. 11 illustrates the current deviation (up to 27%) and the temperatures of the reactors (L1, L2, and L3) according to a conventional multi-parallel converter control method. FIG. 12 illustrates the current deviation (up to 2%) and the temperatures of the reactors (L1, L2, and L3) according to a multi-parallel converter control method of the present disclosure.

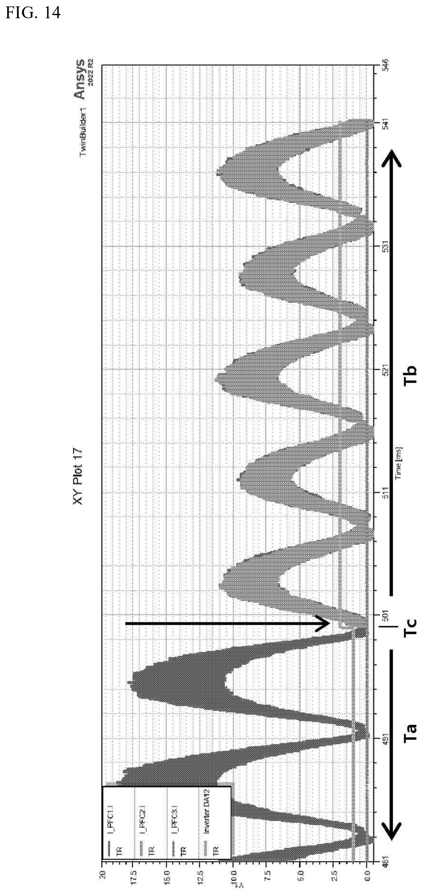

FIG. 13 illustrates the reactor current variation according to the conventional multi-parallel converter control method. FIG. 14 illustrates the reactor current variation according to the multi-parallel converter control method of the present disclosure. Referring to FIGS. 11 and 12, according to the multi-parallel converter control method of the present disclosure, current deviation and temperature deviation are improved.

Referring to FIG. 13, it can be observed that the reactor current (Reactor 2) of a converter that is activated later converges slowly to the reactor current (Reactor 1) of a converter that is already operating.

Referring to FIG. 14, as the current is distributed, the current in the interval (Tb) after the switching time (Tc) becomes lower than the current in the interval (Ta) before the switching time (Tc).

Immediately after the switching time (Tc), identical reactor current waveforms overlap. That is, it can be observed that the current is immediately distributed and stabilized without any current imbalance.

Meanwhile, it is advantageous from a control perspective for the converters to be turned on/off at the zero-crossing point of the power source

A power converting apparatus and a home appliance including the same according to the present disclosure are not limited to the configurations and methods of the embodiments described above. Rather, the embodiments may be selectively combined in whole or in part so as to allow various modifications.

While the preferred embodiments of the present disclosure have been illustrated and described above, the present disclosure is not limited to the specific embodiments described, and various modifications may be made by those skilled in the art without departing from the spirit of the present disclosure as defined by the claims.

## Claims

1. A power converting apparatus (400) comprising:
a rectifier (510) configured to rectify input AC power;
an interleaved converter (520) including a plurality of converters, configured to convert the rectified power into DC power and output the converted DC power;
a current detector (K1, K2, K3) configured to detect a current flowing through the interleaved converter (520); and
a converter controller (415) configured to control the interleaved converter (520),
wherein the interleaved converter (520) includes a plurality of converters (520a, 520b, 520c), and when at least one or more of the plurality of converters (520a, 520b, 520c) are in an on state, if one or more of the remaining converters are turned on, the converter controller (415) controls the newly turned-on converter based on the current measured from the converter already in the on state.

2. The power converting apparatus (400) of claim 1, wherein the converter controller (415) includes current controllers (700) configured to set a duty cycle of a switching control signal applied to the plurality of converters (520a, 520b, 520c), and applies the current measured from the converter already in the on state as an initial value of the current controller corresponding to the newly turned-on converter.

3. The power converting apparatus (400) of claim 1 or 2, wherein the current flowing through the operating converter is the same.

4. The power converting apparatus (400) of any one of claims 1 to 3, wherein the converter controller (415) turns on or off the switching elements provided in the plurality of converters (520a, 520b, 520c) at a zero-crossing point of the input AC power source.

5. The power converting apparatus (400) of any one of claims 1 to 4, wherein the converter controller (415) includes a first current controller (700a) configured to set a duty cycle of a switching control signal applied to a first converter (520a) among the plurality of converters (520a, 520b, 520c), and a second current controller (700b) configured to set a duty cycle of a switching control signal applied to a second converter (520b) among the plurality of converters (520a, 520b, 520c), and when the first converter (520a) is in the on state, if the second converter (520b) is turned on, the converter controller (415) applies the current measured from the first converter (520a) as an initial value of the second current controller (700b).

6. The power converting apparatus (400) of any one of claims 1, 2 or 5, wherein the converter controller (415) includes a first current controller (700a) configured to set a duty cycle of a switching control signal applied to a first converter (520a) among the plurality of converters (520a, 520b, 520c), a second current controller (700b) configured to set a duty cycle of a switching control signal applied to a second converter (520b) among the plurality of converters (520a, 520b, 520c), and a third current controller (700c) configured to set a duty cycle of a switching control signal applied to a third converter (520c) among the plurality of converters (520a, 520b, 520c), and when the first converter (520a) is in the on state, if at least one of the second converter (520b) and the third converter (520c) is turned on, the converter controller (415) applies the current measured from the first converter (520a) as an initial value of the current controller corresponding to the newly turned-on converter.

7. The power converting apparatus (400) of claim 6, wherein, when the first converter (520a) and the second converter (520b) are in the on state, if the third converter (520c) is turned on, the converter controller (415) applies the current measured from the first converter (520a) as an initial value of the third current controller (700c).

8. The power converting apparatus (400) of claim 6 or 7, wherein the first converter (520a) includes:
a first inductor (L1) connected to the rectifier (510);
a first diode (D1) connected to an output terminal of the interleaved converter (520); and
a first switching element (S1) connected between the first inductor (L1) and the first diode (D 1),
the second converter (520b) includes:
a second inductor (L2) connected to the rectifier (510),
a second diode (D2) connected to the output terminal of the interleaved converter (520), and
a second switching element (S2) connected between the second inductor (L2) and the second diode (D2), and
the third converter (520c) includes:
a third inductor (L3) connected to the rectifier (510),
a third diode (D3) connected to the output terminal of the interleaved converter (520), and
a third switching element (S3) connected between the third inductor (L3) and the third diode (D3).

9. The power converting apparatus (400) of any one of claims 1 to 8, further comprising a capacitor connected to the output terminal of the interleaved converter (520),
wherein the converter controller (415) is configured to control the number of converters in operation among the plurality of converters (520a, 520b, 520c), based on a load level corresponding to two terminals of the capacitor.

10. A home appliance comprising the power converting apparatus (400) according to any one of claims 1 to 9.
